# EUROPEAN PATENT SPECIFICATION

(11) **EP 2 996 496 B1**
(45) Date of publication and mention of the grant of the patent: **25.10.2017**
(21) Application number: 14791942.7
(22) Date of filing: 30.04.2014
(51) Int. Cl.: A23P 10/10, A23B 4/06, A23L 3/36, A23L 3/015, A23L 3/20, A23L 3/3418, B65B 25/00, B65B 61/24, A23L 3/02, B65D 21/02, B65B 55/02, B65B 9/20, B65D 85/72, B65B 31/02, B65B 9/12, B65B 31/00

(54) **SYSTEM FOR PACKAGING PORTIONED FROZEN PRODUCTS**
SYSTEM ZUM VERPACKEN VON PORTIONIERTEN GEFRORENEN PRODUKTEN
SYSTÈME D'EMBALLAGE DE PRODUITS SURGELÉS EN PORTION

(30) Priority: 30.04.2013 US 201361817422 P; 29.04.2014 US 201414264784
(43) Date of publication of application: 23.03.2016
(73) Proprietor: J.R. Simplot Company, Boise, ID 83702 (US)
(72) Inventor: WALKER, David Bruce, Boise, Idaho 83702 (US)
(74) Representative: Lucas, Brian Ronald
(86) International application number: PCT/US2014/036143
(87) International publication number: WO 2014/179450

(56) References cited:
- EP-A2- 1 512 332
- WO-A2-2010/091856
- DE-A1- 4 426 421
- US-A- 3 492 132
- US-A- 3 492 132
- US-A- 5 948 456
- US-A1- 2002 031 586
- US-A1- 2003 044 501
- US-A1- 2012 031 798
- US-A1- 2012 269 953
- US-A1- 2012 269 953
- US-B2- 7 575 770

## Description

### BACKGROUND

### Field of the Invention

The present invention relates generally to the packaging of frozen products, such as frozen food products. More particularly, the present invention relates to a system and method for portioning and freezing a bagged product in a manner that allows easy separation of portions of the frozen product from the remainder.

### Related Art

Frozen food products are a mainstay of modem life and the modem food production industry. Freezing a suitably pasteurized food product is an excellent method for preserving the flavor of the food product whether it is obtained from fruit sources, vegetable sources, artificially flavored liquids, meat, dairy products, or combinations of the same. Freezing food also preserves the product from the time it is prepared until the time it is ready to be eaten or used. Frozen food products are desirable in part because they do not require any added preservatives. Since many microorganisms do not grow at temperatures below -9.5°C (about 15°F), freezing a food product can be sufficient by itself to prevent spoilage. Moreover, prepackaged foods that have been sufficiently sterilized before or at the time of packaging, such as through pasteurization, and are properly packaged, can be kept frozen in their package for a very long time - up to many years - without spoiling or losing significant taste and nutritional value, so long as the temperature is kept sufficiently low.

One challenge presented by frozen foods is that of portioning. Many frozen food products are sold in a bulk quantity that may be larger than desired for a single use or a single serving. With many current packaging approaches, an entire package of product must be thawed for use. Thawing a large mass of product can take many hours, which is a disadvantage both in food service and personal or retail applications. In low volume food service operations and in retail applications an entire pouch of frozen product is often more product than can be used immediately. Once thawed, some products can start to spoil very quickly, with the result that thawing excess product leads to waste.

US Patent Specification 3,492,132 discloses manufacturing portion-controlled units of food material, comprising forming a sheet of the food material of pre-selected breadth, depth and length by placing the food material in a flexible bag, sealing the bag and flattening it with the food material inside. Thereafter the sheet of food material is frozen, after which it is scored to define a portion-controlled unit.

For a small quantity use, such as personal use in a home, the user is obligated to separate the desired quantity from the frozen remainder, and return the remainder to the freezer. However, separating a portion of a frozen product from the remainder can be very difficult to do and to do accurately. Often, the quantity that is obtained after significant effort is not the quantity that was desired. Moreover, the very act of dividing the frozen product can expose the product to damage and biological contamination, which can shorten its storage life.

The present application is directed toward one or more of the aforementioned issues.

### SUMMARY

It has been recognized that it would be advantageous to develop a frozen product packaging system that makes it relatively easy to separate a small portion from a frozen product.

It has also been recognized that it would be advantageous to have a frozen product packaging system that promotes compact packaging of the product.

In accordance with one aspect thereof, the present application discloses a system for packaging a frozen product, the system comprising a packaging apparatus, adapted to place and seal a fluid food product into a flexible container; and a mold, configured to press upon and deform at least one surface of the container, to produce a series of compartments in the container with thin segments therebetween; and characterized by a pasteurizing unit, configured to pasteurize the food product in the sealed container and a freezer configured to freeze the product in the container with the mould in place upon the at least one surface.

In accordance with another aspect thereof, the application discloses a method for packaging a product to be frozen, the method comprising placing a fluid food product into a flexible container, sealing the container; applying a mould to at least one surface of the flexible container, the deeply embossing the container, creating a series of compartments separated by thin segments therebetween, characterized by pasteurizing the food product in the sealed container and freezing the product in the container with the mould in place.

In accordance with yet another aspect thereof, the application discloses a portioned, frozen product. The portioned frozen product includes a container of a fluid or semi-fluid food product that has been frozen, and the container and frozen product have an embossed shape, on at least one surface of the container, the embossed shape defining a series of compartments of the food product within the container.

### BRIEF DESCRIPTION OF THE DRAWINGS

Additional features and advantages of the invention will be apparent from the detailed description which follows, taken in conjunction with the accompanying drawings, which together illustrate, by way of example, features of the invention, and wherein:
FIG. 1 is a perspective view of a container of frozen product, formed according to the method of the present disclosure;
FIG. 2 is a perspective view of one embodiment of a form that can be used for packaging and forming a frozen product in accordance with the present disclosure;
FIG. 3 is a schematic diagram of a system for packaging food products in accordance with the present disclosure;
FIG. 4 is an end view of one container of frozen product configured in accordance with the present disclosure;
FIG. 5 is an end view of two bags of frozen product, stacked and nested to fit into a box or carton for shipping; and
FIG. 6 is a flowchart outlining the steps in one embodiment of a method for packaging a frozen product in accordance with the present disclosure.

### DETAILED DESCRIPTION

Reference will now be made to exemplary embodiments illustrated in the drawings, and specific language will be used herein to describe the same. It will nevertheless be understood that no limitation of the scope of the invention is thereby intended. Alterations and further modifications of the inventive features illustrated herein, and additional applications of the principles of the inventions as illustrated herein, which would occur to one skilled in the relevant art and having possession of this disclosure, are to be considered within the scope of the invention.

As noted above, it is desirable to have a means to portion a frozen product that enables thawing and using just part of a pouch. Many frozen products are portioned into pucks and sold in an individually quick-frozen state to accomplish this goal. However, this approach can be difficult with some products, such as guacamole. Due to its sensitivity to heat, thermal Pasteurization is not an option for guacamole, and UHP Pasteurization is frequently used. However, the pressures exerted during the UHP step are great enough that frozen pucks could be crushed and melted together, losing the individual quick-frozen attributes. On the other hand, if a guacamole product were treated with UHP Pasteurization, then formed into pucks, and subsequently frozen and packaged, there is a risk of recontamination of the Pasteurized product during freezing and packaging.

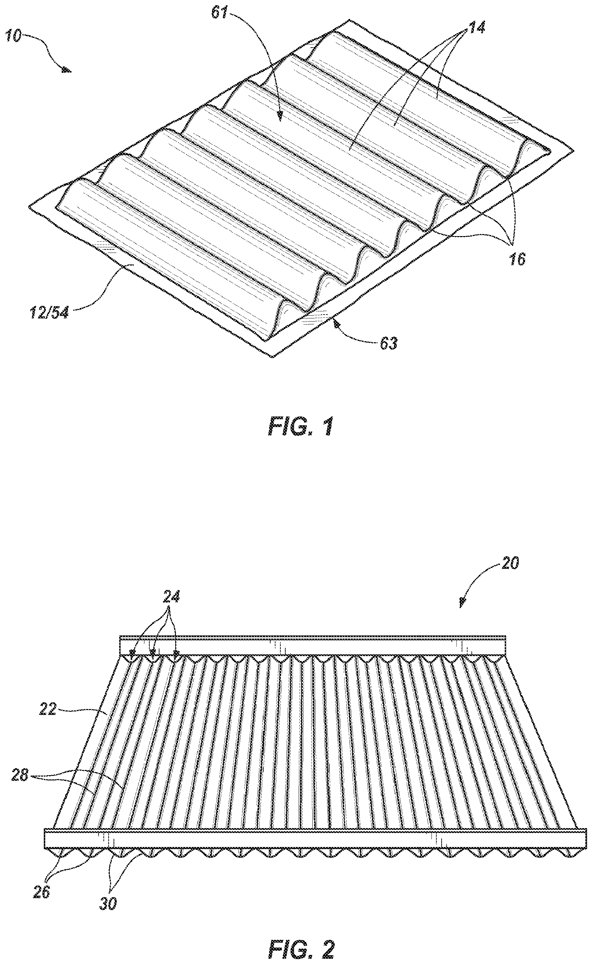

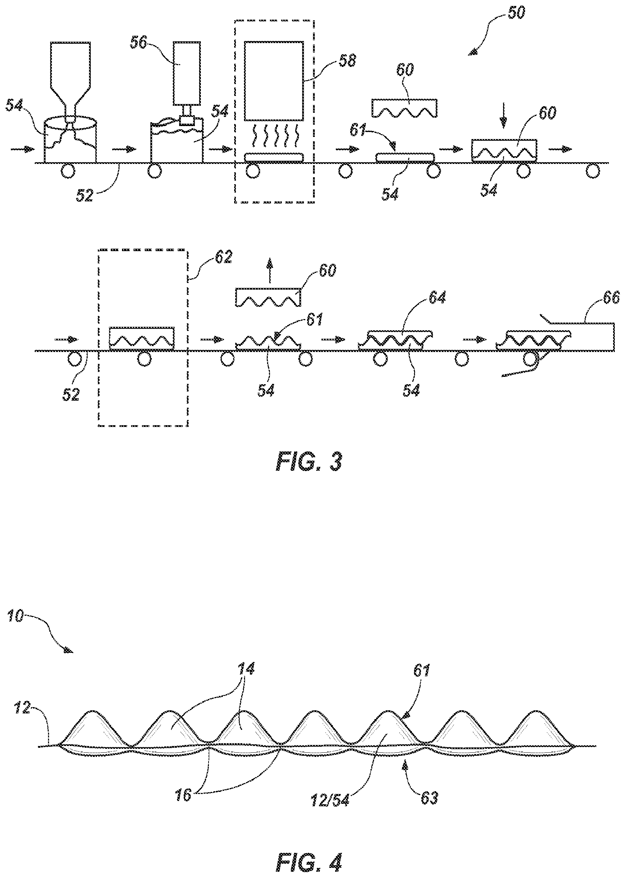

Advantageously, the system and method disclosed herein deeply embosses at least one surface of a sealed flexible container of fluid or semi-fluid product, which is then frozen. Provided in FIG. 1 is a perspective view of an embossed container of frozen food product, indicated generally at 10, formed according to the method of the present disclosure. The embossed unit of frozen food product 10 includes a container 12, such as a flexible polymer bag, that is divided into a series of compartments 14, which are segmented from the bag as a whole through a deep embossing process. The embossing system and method creates mechanically weak regions 16 in the product, which can be easily broken apart for portioning. The compartments 14 and weak regions 16 are also shown in the end view of FIG. 4. The thin sections of product at the weak regions 16 allow the product to easily break at those locations, somewhat in the manner of a segmented chocolate bar or similar product. The product can break easily at the weak regions 16 either with the container 12 closed and intact, or after the container 12 has been opened, allowing a user to retrieve one segment or more than one segment from the container 12 at a time. This enables partial use of the frozen contents of the container 12, and allows more rapid thawing of the portion(s) to be used.

Shown in FIG. 2 is a perspective view of one embodiment of a form 20 that can be used for packaging and forming a frozen product 10 like that of FIG. 1, in accordance with the present disclosure. In this embodiment, the form 20 is a stainless steel plate 22 that has been bent to form a series of corrugations 24. Each corrugation includes a trough 26 and a peak 28, and the form expanse 30 between the peaks and troughs can be straight or curved. The number and size of the corrugations 24 can vary. More or fewer corrugations can be used depending on desired portion size and the overall size of the container. For example, in one embodiment, the corrugated form 20 includes a series of alternating 90° bends having a pitch of about 25.4mm (one inch 1") and an amplitude of about 12.7mm (0.5"). This particular form configuration can be used to portion a 0.453592 kg (one pound) bag 12 of product into eight 0.056699kg (two ounce) portions.

A variety of other form patterns and configurations are also possible, in addition to the corrugated pattern shown in FIG. 2. For example, though not shown herein, forms that are suitable for use in the method disclosed herein can include a series of rods or bars (e.g. stainless steel bars welded into a grid), as an alternative to a plate-type form. A bar-type form can be pressed down upon the container 12 and held in place during freezing, as disclosed herein, allowing portions of the container 12 to bulge upward in the interstitial spaces between the bars or rods to produce the compartments 14 and weak regions 16. Whether plate-type forms or bar-type forms, the form 20 can be shaped to emboss the container in various ways, such as a rectangular or triangular grid pattern, whether on one side only, or both sides of a container 12. Forms that produce other compartment shapes can also be used.

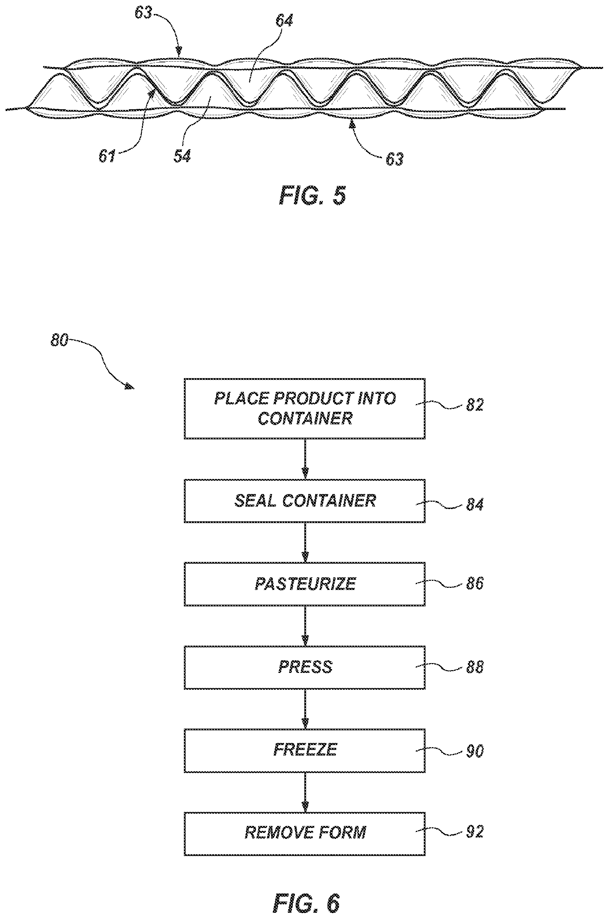

Shown in FIG. 3 is a schematic diagram of a system 50 for packaging food products in accordance with the present disclosure, and FIG. 6 provides a flowchart outlining the steps in one embodiment of a method 80 for packaging a frozen product in accordance with the present disclosure. In the view of FIG. 3, the product is shown traveling along a conveyor 52 in a container, which in this case is a flexible polymer bag 54. In one embodiment, the bag 54 is a polyethylene-EVOH-nylon laminate having a thickness of about 0.1016mm (0.004"). This material provides an oxygen barrier that helps prevent guacamole from browning. Other materials can also be used for this and other types of products. The bag 54 travels on the conveyor 52 from station to station in the packaging system 50. It will be apparent that a variety of apparatus can be used in the packaging process. In a first step, the product is packaged in the container (step 82 in FIG. 6), which in this embodiment is a flexible polymer bag 54. The bag 54 is then sealed (step 84 in FIG. 6) by a sealing machine 56, such as a heat sealing machine. Filling of the bag 54 and sealing it can be accomplished using a vacuum filling unit, which places product into the bag 54 while simultaneously preventing air from entering the container, and seals the bag using

The sealing machine 56 can be a vertical form fill seal (VFFS) machine, which both makes and seals the bags. There are many commercial sources for VFFS machines. One such machine that is commercially available is the Cryovac® Onpack® machine, available from Cryovac, Inc. of Duncan, South Carolina. The portioning and container filling process can also be undertaken using other packaging methods. For example, horizontal form/fill/seal machines, such as those made by Robert Reiser & Co. of Canton, Massachusetts and sold under the name Repak®, can also be used. Pre-made bags sealed with a band sealer can also be used. It is also desirable that the bag 54 be somewhat loose, or in other words, not filled to capacity or under pressure, to accommodate the embossing process, discussed below. In one embodiment, the bag 54 is filled so that when sealed and lying flat upon the conveyor 52, the bag has a thickness of about 19.95mm (¾"). In general, it is desirable to have a flexible pouch or other container that fits loosely enough around the product to allow it to be deformed by the form 20.

The sealed bag 54 containing the product is then transported to a pasteurizing unit 58, where it is pasteurized (step 86 in FIG. 6). As is well known, pasteurization generally involves heating a food product to a certain elevated temperature for a specified length of time in order to kill any microorganisms that may be in the food product. This step is desirable to ensure the safety of food products. Pasteurization of the product after it is sealed in the bag 54 can eliminate microorganisms that are in the food product, and simultaneously prevent subsequent growth of microorganisms. As discussed above, in the case of guacamole and some other products, an Ultra High Pressure (UHP) pasteurization process is desirable because of the characteristics of the product. UHP systems and processes are well known to those of skill in the art of food production. Suitable UHP systems are commercially available from Avure Technologies of Franklin, Tennessee and Hiperbaric S.A. of Burgs, Spain, for example. Those of skill in the art will recognize that many products that can be packaged in the manner outlined in this disclosure can be pasteurized using non-UHP processes.

Following pasteurization, a mold or form 60 is applied to the upper surface 61 of the product bag 54 (step 88 in FIG. 6). This mold presses down and deforms the shape of the top of the bag 54, producing the embossed shape that creates the series of compartments (14 in FIG. 1) and thin segments (16 in FIG. 1) that are between these compartments. As noted above, the system can be configured such that the mold 60 presses down upon the package with enough force to form the separate compartments 14, but nevertheless leaves a thin portion of food product within the thin segments 16, so that the thin segment 16 comprises a portion of the food product and subsequent separation of the individual portions of the food product involves breaking a small region of the product itself, somewhat in the manner of separating segments of a chocolate bar. Alternatively, the system can be configured such that the mold 60 presses down upon the package with enough force to bring the top layer and bottom layer of the bag 54 into direct contact with each other. In this approach, the mold 60 forms the separate compartments 14, and leaves essentially no food product within the thin segments 16, so that subsequent separation of the individual portions of the food product involves little or no breaking of the product itself. As noted above, it is desirable that the bag 54 not be filled to its absolute volumetric capacity before the pressing step so as to allow the downwardly oriented peaks of the mold 60 to push substantially to the bottom surface 63 of the bag 54, while preventing the bag 54 from becoming overstressed and potentially rupturing during the pressing process.

With the mold 60 in place, the bag 54 is transported into a freezer 62, where the product freezes (step 90 in FIG. 6). The freezer 62 can be a helical freezer, such as are often used in the frozen food production industry. Such a freezer includes a conveyor that passes through the freezer, either in an ascending or descending helical path, so that the products passing through the freezer 62 have a sufficient residence time to be frozen in transit.

After the product bag 54 and the form 60 emerge from the freezer 62, the mold 60 can be removed from the bag 54 (step 92 in FIG. 6), producing the unit of frozen food product 10 having the embossed corrugated shape on its top surface 61. Shown in FIG. 4 is an end view of a container or bag 12, 54 having this configuration. By virtue of this process, the frozen, bagged product has a shape that has a generally corrugated top surface 61, and a generally flat bottom surface 63. It is to be noted that the bottom surface 63 is depicted as having a slightly bulged shape in the vicinity of each compartment 14, which is due to the volumetric expansion of the food product during freezing. For purposes of this disclosure, the depicted shape of the bottom surface 63 and any shape substantially like it is considered to be substantially flat.

As discussed above, the form 60 can have a variety of shapes, such that the formed top surface 61 of the product can have a variety of shapes. For example, rather than a corrugated surface, the top surface 61 can be a series of curves or arcs or rectangular ridges, etc. Various other form shapes are possible, and some might be used to create product portions in decorative shapes.

A variety of configurations and mechanisms can be used for transporting and placing the forms 60, in addition to that shown in FIG. 3. For example, the forms 60 can be mounted or built into a conveyor traveling above a separate freezer conveyor (not shown), and configured so that the bags 54 are pressed between a relatively flat freezer conveyor below and an overhead forming conveyor during freezing. This approach could produce the portioned container of frozen product 10 while eliminating labor that might otherwise be used to place, remove, and transport individual forms 60. Other systems and approaches for transporting and using the forms 60 can also be used. For example, rather than placing a form atop the filled polymer bag, the sealed bag of food product can be placed atop a form (e.g. a corrugated plate) and a substantially flat panel or plate can be pressed down upon the bag while it freezes. This sort of system could employ a conveyor with a series of upturned forms, which passes under a flat plate while traveling within a freezer.

It is to be appreciated that both the top surface 61 and bottom surface 63 of the bag 54 can be embossed or shaped in a manner like that disclosed herein. For example, a corrugated form can be placed below the bag 54, with a corresponding upper form placed above the bag and used to press down upon it. The two forms, working together, can create the weak or thin regions in the product where opposing peaks of the forms come closest together. Alternatively, upper and lower forms can be configured to align together in different ways, to produce other shapes and configurations in the container of frozen product.

Referring again to FIG. 3, after emerging from the freezer 62 the frozen product in the formed bag 54 is ready to be packaged for shipping. In the embodiment shown in FIG. 3, a second embossed, frozen product container 64 can be placed atop the first bag 54, with the second bag 64 flipped over or inverted, so that the opposing corrugations of the two bags 54, 64 nest together, allowing multiple frozen, formed bags of product to be compactly inserted into a package, such as a box or carton 66, for storage and/or shipping. Shown in FIG. 5 is an end view of two bags 54, 64 of frozen product nested together in this manner to fit into a box or carton for shipping. With pairs of frozen, embossed bags stacked in this way, each pair will have their generally smooth, flat bottom surfaces 63 facing outward, allowing these pairs to easily stack atop other stacked pairs. Accordingly, any even number of stacked bags can be placed efficiently in pairs in a given carton or other container 66. In one embodiment, a case or carton of frozen, bagged product can contain six or eight bags in three or four stacked pairs.

The system and method disclosed herein applies to portionable fluid or semi-fluid products, and can provide individual frozen portions without the need to form and freeze individual pieces, as is otherwise common. This method can be used on any fluid or semi-fluid product that is shipped frozen. Examples might include guacamole, mash, mashed potatoes, gravy, sauces, soups, ground meats, etc. The product can be pasteurized using Ultra-High Pressure (UHP) Pasteurization systems and portioned while in a sealed container, thus eliminating the need for aseptic packaging and freezing.

The system and method disclosed herein thus provides a very convenient, easily-portioned product, and is believed to be able to do so at a relatively low cost compared to some other portion control products. Additionally, since the process is applied to packaged product, there is far less microbiological risk than with some other portioning methods.

In one exemplary embodiment, this system and method have been applied to produce pouches of frozen guacamole, such as for food service applications. Fresh avocados, frozen vegetables, seasonings, and other minor ingredients were mixed to make the guacamole, which was then vacuum packed in a loose-fitting, flexible polymer pouch. The product was then pasteurized in the pouch using ultra-high pressure (UHP) pasteurization technology. A corrugated form was then placed over the pouch at the freezer infeed. The product inside the pouch, being a fluid product, conforms to the shape of the forms, and freezes into the shape of the form in the freezer. Depending on the form shape and how loosely the pouch fits, individual portions or larger portions may be created that the user can easily break apart from the remainder of the product in the container.

It is to be understood that the above-referenced arrangements are illustrative of the application of the principles of the present invention. It will be apparent to those of ordinary skill in the art that numerous modifications can be made without departing from the principles and concepts of the invention as set forth in the following claims.

## Claims

1. A system for packaging a product to be frozen: comprising
a packaging apparatus (56), adapted to place and seal a fluid food product into a flexible container (54);
a mold (20, 60), configured to press upon and deform at least one surface of the container (54), to produce a series of compartments (14) in the container with thin segments (16) therebetween; and **characterized by**:
a pasteurizing unit (58), configured to pasteurize the food product in the sealed container (54); and
a freezer (62), configured to freeze the product in the container (54) with the mold (20, 60) in place upon the at least one surface.

2. A system in accordance with claim 1, wherein the thin segments (16) comprise a portion of the product.

3. A system in accordance with claim 1 or claim 2, wherein the mold (20, 60) comprises a corrugated profile having a plurality of peaks, the peaks being arranged push toward a bottom layer of the container thus to form a series of compartments (14) with thin segments (16) therebetween.

4. A system in accordance with any one of the preceding claims, further comprising a substantially flat support, underlying the sealed container (54) when the mold (20, 60) presses thereupon, such that the sealed container (54) defines a corrugated profile on a top surface, and a substantially flat profile on a bottom surface thereof.

5. A system in accordance with any one of the preceding claims, wherein the packaging apparatus (56) comprises a vacuum filling unit, configured to place the product into the container (54) while simultaneously preventing air from entering the container.

6. A system in accordance with any one of the preceding claims, further comprising a press, supporting the mold, configured to lower the mold upon the sealed container (54) and release the mold to rest upon the sealed container.

7. A system in accordance with any one of the preceding claims, wherein the pasteurizing unit (58) comprises an ultra-high pressure pasteurization apparatus

8. A system in accordance with any one of the preceding claims, further comprising a conveyor (52), configured to transport the product from station to station in the packaging system.

9. A method for packaging a product to be frozen: comprising
placing a fluid product into a flexible container (54);
sealing the container (54);
applying a mold (20, 60) to at least one surface of the flexible container (54), the mold (20, 60) deeply embossing the container, creating a series of compartments (14) separated by thin segments (16) therebetween; and **characterized by**:
pasteurizing the product in the sealed container (54)
freezing the product in the container (54) with the mold (20, 60) in place.

10. A method in accordance with claim 9, further comprising:
applying a first mold (60) to a top surface of the flexible container; and
applying a second mold to a bottom surface of the flexible container, the first and second molds having opposing peaks that press generally together to create the series of compartments in the container (54).

11. A method in accordance with claim 9 or claim 10, wherein:
applying the mold (60) to at least one surface of the flexible container (54) comprises applying a generally corrugated mold to a top surface of the container (54); and
freezing the product in the container (54) comprises freezing the product with a bottom surface of the container (54) disposed against a substantially flat surface.

12. A method in accordance with any one of claims 9 to 11, further comprising:
stacking a pair of frozen, embossed product containers (54), each having a generally corrugated top surface and a generally flat bottom surface, in opposing relation to each other, with opposing corrugations in a nesting relationship; and
inserting the pair of stacked formed containers (54) into a package for storage and/or shipping.

13. A method in accordance with any one of claims 9 to 12, wherein placing the fluid product into the flexible container (54) comprises placing the product into the container (54) using a vacuum filling unit that substantially prevents air from entering the container during filling.

## Patentansprüche

1. System zum Verpacken eines einzufrierenden Produkts: umfassend:
eine Verpackungsvorrichtung (56), angepasst um ein flüssiges Nahrungsmittelprodukt in einen flexiblen Behälter (54) zu legen und abzudichten;
eine Form (20, 60), angeordnet um auf wenigstens eine Oberfläche des Behälters (54) zu drücken und diese zu verformen, um eine Reihe von Abteilungen (14) in dem Behälter zu produzieren mit dünnen Bereichen (16) dazwischen; und **gekennzeichnet durch**:
eine Pasteurisierungseinheit (58), angeordnet um das Nahrungsmittelprodukt in dem abgedichteten Behälter (54) zu pasteurisieren; und
einen Tiefkühler (62), angeordnet um das Produkt in dem Behälter (54) mit der Form (20, 60) auf der wenigstens einen Oberfläche plaziert einzufrieren.

2. System gemäß Anspruch 1, worin die dünnen Bereiche (16) einen Teil des Produkts umfassen.

3. System gemäß Anspruch 1 oder Anspruch 2, worin die Form (20, 60) ein gewelltes Profil umfasst, welches eine Vielzahl von Spitzen hat, wobei die Spitzen angeordnet sind, um zu einer Bodenschicht des Behälters zu drücken und so eine Reihe von Abteilungen (14) mit dünnen Bereichen (16) dazwischen zu bilden.

4. System gemäß einem der vorangehenden Ansprüche, ferner umfassend einen im Wesentlichen flachen Träger aufweist, der unter dem abgedichteten Behälter (54) liegt, wenn die Form (20, 60) darauf drückt, so dass der abgedichtete Behälter (54) ein gewelltes Profil auf einer oberen Oberfläche und ein im wesentlichen flaches Profil auf einer Bodenoberfläche davon definiert.

5. System gemäß einem der vorangehenden Ansprüche, worin die Verpackungsvorrichtung (56) eine Vakuumfüllungseinheit umfasst, angeordnet um das Produkt in den Behälter (54) zu legen und gleichzeitig zu verhindert, dass Luft in den Behälter gelangt.

6. System gemäß einem der vorangehenden Ansprüche, ferner umfassend eine Presse, die die Form stützt, angeordnet um die Form auf den versiegelten Behälter (54) abzusenken und die Form freizugeben, um auf dem versiegelten Behälter zu liegen.

7. System gemäß einem der vorangehenden Ansprüche, wobei die Pasteurisierungseinheit (58) eine Ultrahochdruckpasteurisierungsvorrichtung umfasst.

8. System gemäß einem der vorangehenden Ansprüche, ferner umfassend einen Förderer (52) aufweist, angeordnet um das Produkt von Station zu Station in dem Verpackungssystem zu transportieren.

9. Verfahren zum Verpacken eines einzufrierenden Produkts: umfassend Platzieren eines flüssigen Produkts in einen flexiblen Behälter (54);
Abdichten des Behälters (54);
Aufbringen einer Form (20, 60) auf wenigstens eine Oberfläche des flexiblen Behälters (54), wobei die Form (20, 60) den Behälter tief einprägt, wodurch eine Reihe von Abteilungen (14) erzeugt wird, die durch dünne Bereiche (16) dazwischen getrennt sind; und **gekennzeichnet durch**:
Pasteurisieren des Produkts in dem versiegelten Behälter (54)
Einfrieren des Produkts in dem Behälter (54) mit der Form (20, 60) am Platz.

10. Verfahren nach Anspruch 9, ferner umfassend:
Aufbringen einer ersten Form (60) auf die obere Oberfläche des flexiblen Behälters; und
Aufbringen einer zweiten Form auf eine Bodenoberfläche des flexiblen Behälters, wobei die erste und die zweite Formen gegenüberliegende Spitzen haben, die im Allgemeinen zusammen drücken, so dass eine Reihe von Abteilungen in dem Behälter gebildet wird.

11. Verfahren nach Anspruch 9 oder Anspruch 10, wobei:
Aufbringen der Form (60) auf mindestens eine Oberfläche des flexiblen Behälters (54) das Aufbringen einer im Allgemeinen gewellten Form auf eine obere Oberfläche des Behälters (54) umfasst; und
Einfrieren des Produkts in dem Behälter (54) das Einfrieren des Produkts mit einer Bodenoberfläche des Behälters (54), die gegen eine im wesentlichen flache Oberfläche angeordnet ist, umfasst.

12. Verfahren nach einem der Ansprüche 9 bis 11, ferner umfassend:
Stapeln eines Paares von gefrorenen, geprägten Produktbehältern (54), die jeweils eine im Allgemeinen gewellte obere Oberfläche und eine im Allgemeinen flache Bodenoberfläche aufweisen, in gegenüberliegender Beziehung zueinander, mit gegenüberliegenden Wellungen in einer Verschachtelungsbeziehung; und
Einfügen des Paares von gestapelt geformten Behältern (54) in eine Verpackung zur Lagerung und/oder Versand.

13. Verfahren nach einem der Ansprüche 9 bis 12, worin das Platzieren des flüssigen Produkts in den flexiblen Behälter (54) das Platzieren des flüssigen Produkts unter Verwendung einer Vakuumfüllungseinheit umfasst, die im Wesentlichen verhindert, dass Luft während des Füllens in den Behälter eindringt.

## Revendications

1. Système pour emballer un produit à congeler : comprenant
un appareil d'emballage (56), adapté pour placer et sceller un produit alimentaire fluide dans un contenant flexible (54) ;
un moule (20, 60), configuré pour appuyer sur et déformer au moins une surface du contenant (54), pour produire une série de compartiments (14) dans le contenant avec des segments fins (16) entre eux ; et **caractérisé par** :
une unité de pasteurisation (58), configurée pour pasteuriser le produit alimentaire dans le contenant scellé (54) ; et
un congélateur (62), configuré pour congeler le produit dans le contenant (54) avec le moule (20, 60) en place sur l'au moins une surface.

2. Système selon la revendication 1, dans lequel les segments fins (16) comprennent une portion du produit.

3. Système selon la revendication 1 ou la revendication 2, dans lequel le moule (20, 60) comprend un profil ondulé ayant une pluralité de crêtes, les crêtes étant agencées pour pousser vers une couche de dessous du contenant pour former ainsi une série de compartiments (14) avec des segments fins (16) entre eux.

4. Système selon l'une quelconque des revendications précédentes, comprenant en outre un support sensiblement plat, sous le contenant scellé (54) lorsque le moule (20, 60) appuie dessus, de sorte que le contenant scellé (54) définisse un profil ondulé sur une surface de dessus, et un profil sensiblement plat sur une surface de dessous de celui-ci.

5. Système selon l'une quelconque des revendications précédentes, dans lequel l'appareil d'emballage (56) comprend une unité de remplissage par le vide configurée pour placer le produit dans le contenant (54) tout en empêchant simultanément l'air d'entrer dans le contenant.

6. Système selon l'une quelconque des revendications précédentes, comprenant en outre une presse, supportant le moule, configurée pour descendre le moule sur le contenant scellé (54) et libérer le moule pour qu'il repose sur le contenant scellé.

7. Système selon l'une quelconque des revendications précédentes, dans lequel l'unité de pasteurisation (58) comprend un appareil de pressurisation ultra-haute pression.

8. Système selon l'une quelconque des revendications précédentes, comprenant en outre un convoyeur (52), configuré pour transporter le produit de station en station dans le système d'emballage.

9. Procédé pour emballer un produit à congeler : comprenant
le placement d'un produit fluide dans un contenant flexible (54) ;
le scellage du contenant (54) ;
l'application d'un moule (20, 60) à au moins une surface du contenant flexible (54), le moule (20, 60) gaufrant en profondeur le contenant, créant une série de compartiments (14) séparés par des segments fins (16) entre eux ; et **caractérisé par** :
la pasteurisation du produit dans le contenant scellé (54)
la congélation du produit dans le contenant (54) avec le moule (20, 60) en place.

10. Procédé selon la revendication 9, comprenant en outre :
l'application d'un premier moule (60) à une surface de dessus du contenant flexible ; et
l'application d'un second moule à une surface de dessous du contenant flexible, les premier et second moules ayant des crêtes opposées qui appuient généralement conjointement pour créer la série de compartiments dans le contenant (54).

11. Procédé selon la revendication 9 ou la revendication 10, dans lequel :
l'application du moule (60) à au moins une surface du contenant flexible (54) comprend l'application d'un moule généralement ondulé à une surface de dessus du contenant (54) ; et
la congélation du produit dans le contenant (54) comprend la congélation du produit avec une surface de dessous du contenant (54) disposée contre une surface sensiblement plate.

12. Procédé selon l'une quelconque des revendications 9 à 11, comprenant en outre :
l'empilement d'une paire de contenants (54) de produit gaufrés et congelés, ayant chacun une surface de dessus généralement ondulée et une surface de dessous généralement plate, en relation opposée l'une à l'autre, avec des ondulations opposées dans une relation d'imbriquement ; et
l'insertion de la paire de contenants (54) formés empilés en un emballage pour le stockage et/ou l'expédition.

13. Procédé selon l'une quelconque des revendications 9 à 12, dans lequel le placement du produit fluide dans le contenant flexible (54) comprend le placement du produit dans le contenant (54) à l'aide d'une unité de remplissage par le vide qui empêche sensiblement l'air d'entrer dans le contenant pendant le remplissage.
